# EUROPÄISCHE PATENTSCHRIFT

(11) **EP 0 319 745 B1**
(45) Veröffentlichungstag und Bekanntmachung des Hinweises auf die Patenterteilung: **07.01.1993**
(21) Anmeldenummer: 88118997.1
(22) Anmeldetag: 15.11.1988
(51) Int. Cl.: G01L 5/28

(54) **Prüfstand für Bremsenaggregate von Fahrzeugen**
Teststand for brake units of vehicles
Banc d'essai pour unités de freinage de véhicules

(30) Priorität: 11.12.1987 DE 3742035
(43) Veröffentlichungstag der Anmeldung: 14.06.1989
(73) Patentinhaber: Bayerische Motoren Werke Aktiengesellschaft, 80788 München (DE)
(72) Erfinder: Buchetmann, Anton Josef, D-8000 München 80 (DE)

(56) Entgegenhaltungen:
- BBC-NACHRICTHEN, Band 63, Nr. 2, 1981, Seiten 59-65, Mannheim, DE; H.J. VON THUN: "Bremsenprüfstand mit Schwungmassensimulation und zwei Bremsstationen"

## Beschreibung

Die Erfindung bezieht sich auf einen Prüfstand der Bauart mit den Merkmalen nach den Oberbegriffen der Ansprüche 1 und 8 und auf ein Verfahren zum Betrieb eines derartigen Prüfstandes mit den Merkmalen des Oberbegriffes des Anspruches 13.

Bei bekannten Prüfständen dieser Bauart und bekannten Verfahren zu deren Betrieb - BBC-Nachrichten Heft 2/1981 - sind einem Antriebsaggregat an dessen beiden entgegengesetzten Antriebswellenenden je eine Prüfeinheit einzeln oder gemeinsam ankuppelbar. Dadurch ist jeweils sowohl ein einzelner als auch ein gemeinsamer funktionell verkoppelter Prüflauf beider Bremsenaggregate möglich. Zur zeitlich besseren Nutzung derartiger Doppelprüfstände bei Einzelprüfläufen ist ferner ein geschachtelter Betrieb, auch Time-Sharing-Betrieb, vorgesehen, bei dem während der Abkühlzeit eines Bremsenaggregates dieses zwar mit angetrieben, jedoch nur das zweite Bremsenaggregat einem Prüflauf ausgesetzt wird. Da die Abkühlzeit zur Abbremszeit der Bremsaggregate jedoch in einem Zeitverhältnis von über 10:1 bis 30:1 steht, ist der Nutzungsgewinn durch den geschachtelten Betrieb relativ gering.

Der Erfindung liegt die Aufgabe zugrunde, den Prüfstand und das Verfahren zu dessen Betrieb so weiterzubilden, daß die Abkühlzeit sowie auch die Rüstzeit eines Bremsenaggregates weitestgehend ohne Verlustzeit für den Prüflauf der Bremsenaggregate genutzt werden kann, so daß sowohl der Nutzungsgrad des Prüfstandes erhöht als auch die Gesamtprüfzeit von Bremsenaggregaten verkürzt wird.

Zur Lösung dieser Aufgabe sieht die Erfindung die Kennzeichen-Merkmale der Patentansprüche 1 und 8 alternativ sowie 13 vor. Durch die Zuordnung mehrerer Prüfeinheiten bzw. Bremsenaggregate zu einem Wellenende des Antriebs-Aggregates wird der Nutzungsgrad eines derartigen Bremsen-Prüfstandes gemäß dem Verfahren nach Anspruch 13 auf ein mehrfaches erhöht, da das Zeitverhältnis von Bremszeit zu Abkühlzeit mit bis zu 1:30 in Verbindung mit einer entsprechend programmierten Steuerung einer automatischen Koppelung des Antriebsaggregates mit jeweils einem abgekühlten und in fester Zuordnung bereitstehenden Bremsenaggregat - abgesehen von dem geringen Zeitbedarf der selbsttätigen Ent- und Wiederkoppelung - ohne wesentliche Verlustzeiten nutzbar ist. Die Anzahl der einem Antriebsaggregat zugeordneten Prüfeinheiten kann dabei so hoch gewählt werden, daß zusätzlich mindestens eine Prüfeinheit für Rüstarbeiten zur Verfügung steht, zumal außer dem jeweils angekoppelten zu allen übrigen Prüfeinheiten ohne Eingriff in den Prüflauf ein freier Zugriff möglich ist.

Die Merkmale der Ansprüche 2 bis 7 und 9 bis 12 enthalten vorteilhafte Zuordnungsmöglichkeiten des Antriebsaggregates und der Prüfeinheiten zueinander, die je nach den im Anwendungsfall gegebenen Bedingungen bezüglich Räumlichkeit, Bauteilgröße und Prüfbedarf auswählbar sind.

Die Merkmale der Ansprüche 14 und 15 bilden das erfindungsgemäße Verfahren weiter. Das relativ langsame Drehen der drehenden Bremsenteile während der Abkühlzeit nach Anspruch 14 vermeidet deren ungleichmäßiges Abkühlen sowie ein Überhitzen und Festbacken der Bremsbeläge von Scheibenbremsen an Bremsscheiben und ermöglicht ferner gemäß der Weiterbildung nach den Merkmalen des Anspruches 15 die vorteilhafte Prüfung der Bremsenteile, insbesondere mittels Rißindikatoren und im abgekühlten Zustand.

In der Zeichnung sind Ausführungsbeispiele der Erfindung dargestellt. Es zeigen:
- Fig. 1: einen programmgesteuerten Prüfstand für Bremsenaggregate von Fahrzeugen mit einem an mehrere feststehende Prüfeinheiten andockbaren Antriebsaggregat in schematischer Darstellung,
- Fig. 2: einen Prüfstand entsprechend Fig. 1 mit mehreren einem feststehenden Antriebsaggregat aus einem Magazin zuführbaren Bremsenaggregaten,
- Fig. 3: einen Prüfstand entsprechend Fig. 1 mit mehreren einem feststehenden Antriebsaggregat mittels eines Revolvermagazins zuführbaren Bremsenaggregaten und
- Fig. 4: einen Prüfstand entsprechend Fig. 1 mit mehreren einem feststehenden Antriebsaggregat mittels Wechselvorrichtungen getrennt zuführbaren drehenden und feststehenden Bremsenteilen von Bremsenaggregaten.

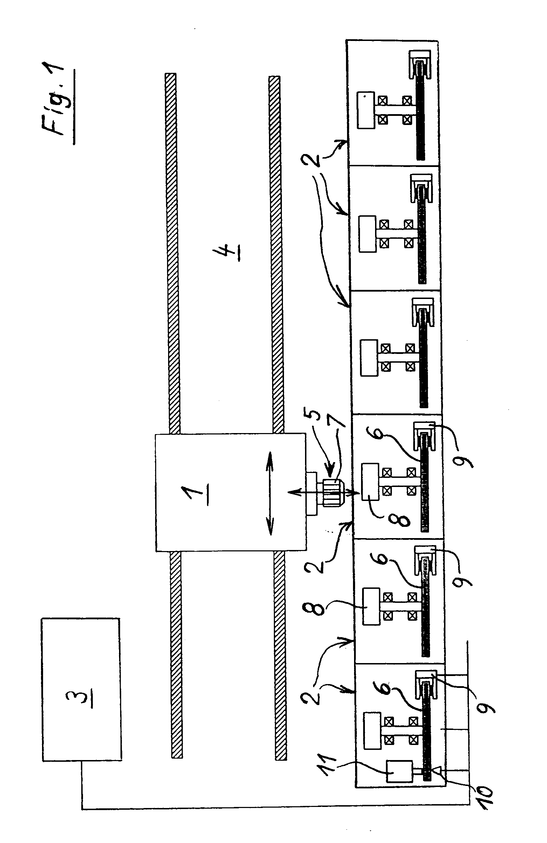

Ein Prüfstand für Bremsenaggregate von Fahrzeugen, bevorzugt für Scheibenbremsen-Aggregate von Personenkraftwagen, besteht gemäß Fig. 1 im wesentlichen aus einem Antriebsaggregat 1, mehreren mit diesem koppelbaren Prüfeinheiten 2 und einer Bedien- und Programm-Steuervorrichtung 3, die gegenseitige elektrische, pneumatische und/oder hydraulische Leitungs-Verbindungen aufweisen.

Das Antriebsaggregat 1 enthält in üblicher Weise zur Schwungmassen-Simulation eines gebremsten Fahrzeuges ausgerüstete elektrische Geräte und Stellvorrichtungen zu dessen achsparallelem Bewegen auf einer Führungsbahn 4 und zum achsialen An- und Abkoppeln seines Antriebswellenendes 5 an die gegenseitig und zum Antriebsaggregat 1 parallelachsig in einer Reihe angeordneten drehenden Bremsenteile 6 der Prüfeinheiten 2 mittels beiderseitiger Kupplungshälften 7 und 8.

Das An- und Abkoppeln des Antriebsaggregates 1 an jeweils einer Prüfeinheit 2 wird gemäß dem Programm der Programm-Steuervorrichtung 3 und mittels nicht dargestellter Positionier-Vorrichtungen selbsttätig gesteuert. Auch der Ablauf der Prüfläufe der aus den drehenden und feststehenden Bremsenteilen 6 und 9, nämlich insbesondere Scheibenbremsen bzw. Bremszangen mit Bremsbelägen und -zylindern, bestehenden Bremsenaggregate jeder Prüfeinheit 2 wird von der Programm-Steuervorrichtung 3 nach festgelegten Bedingungen bestimmt und mittels üblicher nicht dargestellter Meß-Sensoren überwacht sowie im Bedarfsfall unterbrochen.

Bei Prüfläufen zum Feststellen der Dauerstandfestigkeit der Bauteile der Bremsenaggregate, insbesondere der Rißbeständigkeit von Bremsscheiben, wird durch die Programm-Steuervorrichtung 3 ein Prüflauf-Programm vollzogen, bei dem jeweils einem Abbremsen einer Bremsscheibe mit entsprechend hohem Erhitzen derselben ein zeitlich vielfach länger dauerndes Abkühlen dieser Bremsscheibe folgt. Während dieser Abkühlphase bewirkt die Programm-Steuervorrichtung 3 ein Abkoppeln des Antriebsaggregates 1 von der abkühlenden Prüfeinheit 2 und ein Ankoppeln an eine abgekühlte und zum Abbremsen bereitstehende andere der übrigen Prüfeinheiten 2. Bei einem Zeitverhältnis von bis zu 1 : 30 der Abbremszeit zur Abkühlzeit können während einer Abkühlzeit einer Prüfeinheit 2 mehrere weitere Prüfeinheiten 2 einem Abbremsen einschließlich der erforderlichen Zeit für die Koppelungs-Vorgänge des Antriebsaggregates 1 unterzogen werden. Durch diesen geschachtelten Mehrfach-Prüflauf wird einerseits ein hoher Nutzungsgrad des Prüfstandes und andererseits aufgrund der gleichzeitigen Prüfung mehrerer Bremsenaggregate eine kurze Gesamtprüfzeit dieser Bremsenaggregate erreicht.

Sobald an einem der Prüfeinheiten 2 eine Fehlfunktion auftritt, wird diese mittels entsprechender Sensoren, insbesondere Rißindikatoren 10 an den drehenden Bremsenteilen 6, nämlich den Bremsscheiben, und Bremsbelag-Verschleiß-Sensoren an den feststehenden Bremsenteilen 9, nämlich den Bremsenzangen, ermittelt und der Programm-Steuervorrichtung zugeleitet, so daß diese die betroffene Prüfeinheit 2 aus dem weiteren Prüflauf ausscheidet. Die Funktion der Rißindikatoren 10 und zugleich zum Gewährleisten eines gleichmäßigen Abkühlens der drehenden Bremsenteile, den Bremsscheiben, sowie zum Vermeiden eines hitzebedingten Festbackens bzw. -klebens der Bremsbeläge an der heißen Bremsscheibe, enthält jede Prüfeinheit 2 eine Antriebsvorrichtung 11 zum relativ langsamen Drehen der Bremsscheibe während der Abkühlzeit.

Durch die feststehende Anordnung der Prüfeinheiten 2 besteht die gefahrlose Möglichkeit, jeweils diejenigen Prüfeinheiten den erforderlichen Umrüst- oder sonstigen Wartungsarbeiten zu unterziehen, die einem gleichzeitig ununterbrochenem Prüflauf anderer Prüfeinheiten 2 nicht unterzogen sind. Die Nutzungszeit des Prüfstandes wird somit auch bei einem Großteil der Wartungs- und Umrüstvorgänge nicht negativ beeinträchtigt.

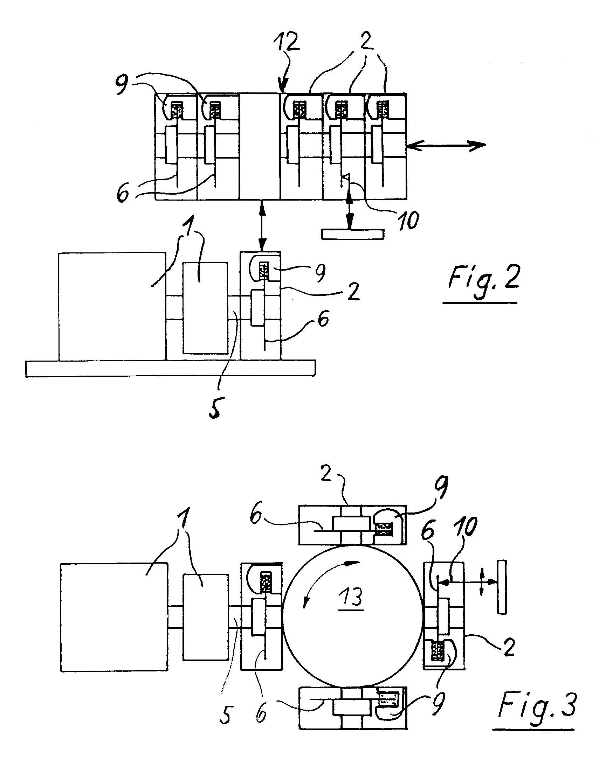

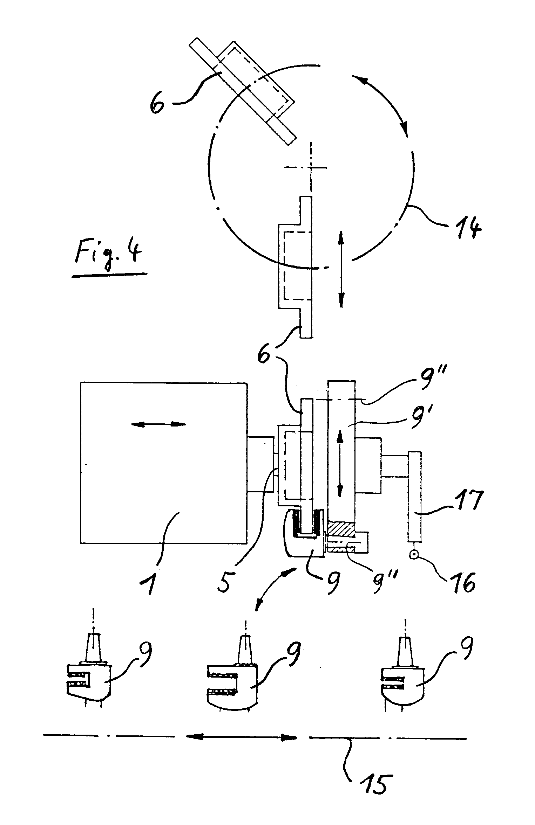

Die alternativen Ausbildungen gemäß den Fig. 2 bis 4 zum vorbeschriebenen Prüfstand nach Fig. 1 unterscheiden sich von letzterem prinzipiell durch die feststehende Anordnung des Antriebsaggregates 1 und die mittels bekannter, nicht dargestellter Schnellwechsel-Vorrichtungen zu einem Antriebswellenende 5 zuführbaren Bremsenaggregate 6, 9 als Prüfeinheiten 2 nach den Fig. 2 und 3 bzw. getrennt zuführbaren drehenden und feststehenden Bremsenteilen, nämlich Bremsscheiben 6 und Bremszangen 9, nach Fig. 4. Nach Fig. 2 ist dabei ein Bremsenaggregat-Magazin 12 vorgesehen, in dem mehrere Prüfeinheiten 2 gleichachsig hintereinander bevorratet sind und das achsparallel neben dem Antriebsaggregat 1 diesem derart zugeordnet ist, daß durch axiales Bewegen des Magazins 12 jeweils eine Prüfeinheit 2 seiner Prüflauf-Stellung am Antriebsaggregat 1 zugeordnet und mittels einer bei Werkzeugmaschinen bekannten Schnellwechsel-Vorrichtung, durch radiales Bewegen zwischen Magazin 12 und Antriebsaggregat 1 ausgetauscht und jeweils befestigt werden kann. Ein Rißindikatior 10 kann dabei allen Prüfeinheiten 2 im Magazin 12 gemeinsam zugeordnet werden.

In Fig. 3 sind die Prüfeinheiten 2 an einem Revolvermagazin 13 befestigt, das eine quer zum Antriebswellenende 5 liegende Drehachse aufweist, zu der die Achsen der Prüfeinheiten 2 radial angeordnet sind. Hierbei kann jeweils eine Prüfeinheit 2 dem Antriebsaggregat 1 zugeordnet und an dieses angekoppelt werden, während insbesondere die gegenüberliegende Prüfeinheit 2 gut zugänglich angeordnet ist.

Nach Fig. 4 ist für die drehenden Bremsenteile, nämlich die Bremsscheiben 6, ein Dreh-Magazin 14 und für die feststehenden Bremsenteile, nämlich die Bremsenzangen 9, ein Verschiebe-Magazin 15 vorgesehen. Beide Magazine 14 und 15 können für untereinander gleiche oder unterschiedliche Bremsenteile ausgebildet sein. Mittels Schnellwechsel-Vorrichtungen, die bei Werkzeugmaschinen handelsüblich sind, lassen sich auch bei dieser Ausbildung die Bremsenteile 6 und 9 am Antriebswellenende 5 des Antriebsaggregates 1 an- und abdocken bzw. jeweils in Prüflauf- und in Abkühl-Position verbringen. Zur Aufnahme von Bremsenzangen 9 mit verschiedenen Abmessungen weist die zugehörige Aufnahmevorrichtung 9' Aufnahmekonen 9'' mit unterschiedlichen Abständen zur Drehachse des Antriebswellenendes 5 und damit auch zur Kombination mit unterschiedlichen Bremsscheiben-Abmessungen auf.

In Fig. 4 ist zusätzlich zu den aus Fig. 1 zu übernehmenden Einzelheiten und Ausstattungen eines derartigen Prüfstandes die Anordnung einer Kraftmeßdose 16 mit zugehörigem Hebelarm 17 dargestellt, die das auf die stehenden Bremsenzangen 9 einwirkende Bremsmoment des Bremsenaggregates 2 in die Programm-Steuervorrichtung 3 übermittelt. Im übrigen sind zur Vereinfachung der Darstellungen weitere Einzelheiten des Prüfstandes in der Zeichnung nicht enthalten, zumal derartige Einzelheiten von bisher üblichen und bekannten Prüfständen für Bremsen und andere Maschinen sowie von Werkzeugmaschinen übernommen werden können.

Bei allen Ausführungen der Erfindung ist es vorteilhaft möglich, gleichzeitig je ein vorderes und hinteres Bremsenaggregat gemeinsam einem Prüflauf-Programm zu unterziehen. Hierzu werden je zwei Bremsscheiben und Bremsenzangen in einer Prüfeinheit zusammengefaßt und entsprechend den bei vorderen und hinteren Bremsen im Fahrzeug unterschiedlichen Bedingungen geprüft.

## Patentansprüche

1. Prüfstand für Bremsenaggregate von Fahrzeugen,
mit einem Antriebsaggregat, dessen Antriebswelle mit dem drehenden Bremsenteil lösbar antriebsverbunden ist, und
mit mehreren Prüfeinheiten, an denen je ein Bremsenaggregat mittels lösbarer Lagerungen und Halterungen der drehenden und feststehenden Bremsenteile befestigt ist,
dadurch gekennzeichnet,
daß die Prüfeinheiten in gegenseitig und zu einem Antriebswellenende des Antriebsaggregates festgelegter Zuordnung befestigt und wahlweise einzeln mit diesem Antriebswellenende kuppelbar sind,
wobei die Prüfeinheiten gemeinsam einerseits und das Antriebsaggregat andererseits relativ zueinander bewegbar sind.

2. Prüfstand nach Anspruch 1, dadurch gekennzeichnet,
daß das Antriebsaggregat feststehend und die Prüfeinheiten gemeinsam bewegbar sind.

3. Prüfstand nach Anspruch 1, dadurch gekennzeichnet,
daß das Antriebsaggregat bewegbar und die Prüfeinheiten feststehend sind.

4. Prüfstand nach Anspruch 3, dadurch gekennzeichnet, daß die Prüfeinheiten in einer Reihe achsparallel nebeneinander angeordnet sind und das Antriebsaggregat quer zu den Achsen der Prüfeinheiten und des Antriebsaggregates bewegbar ist.

5. Prüfstand nach Anspruch 1, dadurch gekennzeichnet,
daß die Prüfeinheiten in einem Kreisbogen mit radial gerichteten Achsen und das Antriebsaggregat inner- oder außerhalb des Prüfeinheiten-Kreises angeordnet sind.

6. Prüfstand nach Anspruch 5, dadurch gekennzeichnet,
daß die Prüfeinheiten in einer revolvertrommelförmig drehbaren Aufnahme einem festehenden Antriebsaggregat zugeordnet sind.

7. Prüfstand nach Anspruch 6, dadurch gekennzeichnet,
daß die Achsen der Antriebswelle und die Drehachse der Aufnahme sich rechtwinkelig schneiden und
daß die Achsen der Bremsenaggregate radial zur Drehachse der Aufnahme angeordnet sind.

8. Prüfstand für Bremsenaggregate von Fahrzeugen,
mit einem Antriebsaggregat, dessen Antriebswelle mit dem drehenden Bremsenteil eines Bremsenaggregates lösbar antriebsverbunden ist, und
mit mindestens einer Haltevorrichtung, an der die feststehenden Bremsenteile lösbar befestigt sind,
dadurch gekennzeichnet,
daß mehrere drehende und/oder feststehende Bremsenteile mittels mindestens je einer Schnellwechsel-Vorrichtung zwischen deren der Antriebswelle bzw. der Haltevorrichtung zugeordneten Prüfstellung und mindestens einer Bereitschaftsstellung bewegbar sind.

9. Prüfstand nach Anspruch 8, dadurch gekennzeichnet,
daß die Bremsscheiben von Scheibenbrems-Aggregaten mittels einer automatischen Wechselvorrichtung aus einem Bremsscheiben-Magazin zu- und rückführbar sind.

10. Prüfstand nach Anspruch 8, dadurch gekennzeichnet,
daß mehrere Bremssättel von Scheibenbrems-Aggregaten an einer Mehrfachhalterung befestigt sind und
daß durch Bewegen der Mehrfachhalterung jeweils ein Bremssattel außer und in Prüfstellung verbringbar ist.

11. Prüfstand nach Anspruch 1 oder 8, dadurch gekennzeichnet,
daß zusammen mit je einem drehenden und/oder feststehenden Bremsenteil benachbarte Rad- bzw. Radaufhängungs-Bauteile angeordnet sind.

12. Prüfstand nach Anspruch 1 oder 8, dadurch gekennzeichnet,
daß jeder Prüfeinheit bzw. mindestens einer Bereitschaftsstellung der Bremsenteile eine selbsttätige Prüfvorrichtung für die Verschleißteile, eine Kühlvorrichtung und/oder eine Drehantriebsvorrichtung für die drehenden Bremsenteile zugeordnet sind.

13. Verfahren zum Betrieb eines Prüfstandes nach Anspruch 1 oder 8,
bei dem der Prüflauf eines Bremsenaggregates Abkühlzeiten desselben enthält, während denen zumindest ein Teil des Prüflaufes eines weiteren Bremsenaggregates abläuft,
dadurch gekennzeichnet,
daß das Antriebsaggregat während der Abkühlzeit eines oder nacheinander mehrerer Bremsaggregate von diesen abgekuppelt ist und mit einem anderen oder nacheinander mit mehreren anderen Bremsaggregat(en) gekuppelt ist und diese antreibt.

14. Verfahren nach Anspruch 13, dadurch gekennzeichnet,
daß die drehenden Bremsenteile der abgekuppelten Bremsaggregate während der Abkühlzeit mittels einer vom Antriebsaggregat unabhängigen Antriebsvorrichtung mit relativ geringer Drehzahl angetrieben werden.

15. Verfahren nach Anspruch 13, dadurch gekennzeichnet,
daß die drehenden und/oder feststehenden Bremsenteile der abgekuppelten Bremsenaggregate während und/oder nach der Abkühlzeit auf Funktionsfähigkeit, insbesondere Rißfreiheit von Bremsscheiben bzw. -trommeln und Abnutzung von Bremsbelägen, selbsttätig geprüft werden.

## Claims

1. A test stand for brake sets of vehicles, comprising a drive set having a drive shaft releasably connected for drive purposes to the rotating brake part, and a number of test units, to each of which a brake set is secured via releasable bearings and holders of the rotating and stationary brake parts, characterised in that the test units are secured in a fixed order relative to one another and to an end of the drive-set shaft and can optionally be individually coupled to the shaft end, the test units in common being movable relative to the drive set.

2. A test stand according to claim 1, characterised in that the drive set is stationary and the test units are movable in common.

3. A test stand according to claim 1, characterised in that the drive set is movable and the test units are stationary.

4. A test stand according to claim 3, characterised in that the test units are disposed next to one another in a row with their axes parallel and the drive set is movable transversely to the axes of the test units and of the drive set.

5. A test stand according to claim 1, characterised in that the test units are disposed in an arc with radially directed axes and the drive set is disposed inside or outside the circle of test units.

6. A test stand according to claim 5, characterised in that the test units are disposed in a revolving drum-shaped rotatable holder and associated with a stationary drive set.

7. A test stand according to claim 6, characterised in that the axes of the drive shaft and the axis of rotation of the holder intersect at right angles and the axes of the brake sets are disposed radially relatively to the axis of rotation of the holder.

8. A test stand for brake sets of vehicles, comprising a drive set having a drive shaft connected for driving purposes to the rotating brake part of a brake set, and with at least one holding device to which the stationary brake parts are releasably secured, characterised in that a number of rotating and/or stationary brake parts are movable by at least one quick-change device each, between a standby position and a test position associated with the drive shaft and/or the holding device.

9. A test stand according to claim 8, characterised in that the brake discs of disc-brake sets are movable to and away from a brake disc magazine by an automatic change device.

10. A test stand according to claim 8, characterised in that a number of calipers of disc brake sets are secured to a multiple holder and one caliper is movable out of and another is movable into the test position by moving the multiple holder.

11. A test stand according to claim 1 or 8, characterised in that adjacent wheel or wheel-suspension components are disposed together with each rotating and/or stationary brake part.

12. A test stand according to claim 1 or 8, characterised in that each test unit and/or at least one standby position of the brake parts is associated with an independent device for testing the wearing parts, a cooling device and/or a rotary drive device for the rotating brake parts.

13. A method of operating a test stand according to claim 1 or 8, in which the test run of a brake set comprises cooling times thereof, during which at least a part of the test run of another brake set takes place, characterised in that during the cooling time of one or a number of successive brake sets, the drive set is uncoupled therefrom and coupled to and drives one or more other successive brake sets.

14. A method according to claim 13, characterised in that, during the cooling time, the rotating brake parts of the uncoupled brake sets are driven at a relatively low speed by a drive device independent of the drive set.

15. A method according to claim 13, characterised in that, during and/or after the cooling time, the rotating and/or stationary brake parts of the uncoupled brake set are automatically tested for operability, more particularly freedom from cracks in brake discs or drums and wear on brake linings.

## Revendications

1. Banc d'essai pour unités de freinage de véhicules, avec une unité d'entraînement, dont l'arbre d'entraînement est relié de façon amovible à la partie de freinage tournante, et avec plusieurs unités de contrôle sur lesquelles est respectivement fixée une unité de freinage au moyen de stockages et de fixations amovibles des pièces de freinage tournantes et fixes, banc d'essai caractérisé en ce que les unités de contrôle sont fixées en association réciproque et déterminées par rapport à une extrémité d'arbre d'entraînement de l'unité d'entraînement, et sont susceptibles d'être couplées individuellement à volonté avec cette extrémité d'arbre d'entraînement, tandis que l'ensemble des unités de commande, d'une part, et l'unité d'entraînement, d'autre part, peuvent être déplacés l'un par rapport à l'autre.

2. Banc d'essai selon la revendication 1, caractérisé en ce que l'unité d'entraînement est fixe, tandis que les unités de contrôle peuvent être déplacées en commun.

3. Banc d'essai selon la revendication 1, caractérisé en ce que l'unité d'entraînement peut être déplacée, tandis que les unités de contrôle sont fixes.

4. Banc d'essai selon la revendication 3, caractérisé en ce que les unités de contrôle sont disposées l'une à côté de l'autre en une rangée avec leurs axes parallèles entre eux, et l'unité d'entraînement peut être déplacée transversalement par rapport aux axes des unités de contrôle et de l'unité d'entraînement.

5. Banc d'essai selon la revendication 1, caractérisé en ce que les unités de contrôle sont disposées sur un arc de cercle avec leurs axes dirigés radialement, tandis que l'unité d'entraînement est disposée à l'intérieur ou à l'extérieur du cercle des unités de contrôle.

6. Banc d'essai selon la revendication 5, caractérisé en ce que les unités de contrôle placées dans un logement rotatif en forme de tambour-revolver sont associées à une unité d'entraînement fixe.

7. Banc d'essai selon la revendication 6, caractérisé en ce que les axes de l'arbre d'entraînement et les axes de rotation du logement se coupent à angle droit, et en ce que les axes des unités de freinage sont disposés radialement par rapport à l'axe de rotation du logement.

8. Banc d'essai pour des unités de freinage de véhicules, avec une unité d'entraînement dont l'arbre d'entraînement est relié de façon amovible à la partie tournante de freinage d'une unité de freinage, et avec au moins un dispositif de maintien auquel sont fixées, de façon amovible, les parties fixes de freinage, banc d'essai caractérisé en ce que plusieurs parties de freinage tournantes et/ou fixes sont susceptibles d'être déplacées au moyen d'au moins un dispositif d'échange rapide entre leur position de contrôle associée à l'arbre d'entraînement ou bien au dispositif de maintien, et au moins une position de réserve.

9. Banc d'essai selon la revendication 8, caractérisé en ce que les disques de freins d'unités de freins à disques, peuvent être amenés au moyen d'un dispositif échangeur automatique à un magasin de freins à disques et en être enlevés.

10. Banc d'essai selon la revendication 8, caractérisé en ce que plusieurs étriers de freins d'unités de freins à disques, sont fixés sur un support multiple et que, par déplacement de ce support multiple, un étrier de frein peut être extrait et amené dans la position de contrôle.

11. Banc d'essai selon la revendication 1 ou la revendication 8, caractérisé en ce que, conjointement avec une partie du frein tournante et/ou fixe, sont disposées des parties constitutives voisines de roues ou de suspensions de roues.

12. Banc d'essai selon la revendication 1 ou la revendication 8, caractérisé en ce qu'à chaque unité de contrôle ou bien au moins à une position de réserve des parties de freins, sont associés un dispositif automatique de contrôle pour les pièces d'usure, un dispositif de refroidissement et/ou un dispositif d'entraînement en rotation pour les parties tournantes de freins.

13. Procédé pour l'exploitation d'un banc d'essai selon la revendication 1 ou la revendication 8, procédé dans lequel le processus de contrôle d'une unité de freinage comprend des périodes de refroidissement de cette unité pendant lesquelles se déroule au moins une partie du processus de contrôle d'une autre unité de freinage, procédé caractérisé en ce que l'unité d'entraînement, pendant le temps de refroidissement d'un ou de plusieurs unités de freinage successives, est découplée de celles-ci et est couplée avec une autre ou successivement avec plusieurs autres unités de freinage et les entraîne.

14. Procédé selon la revendication 13, caractérisé en ce que les parties de freinage tournantes des unités de freinage découplées, sont, pendant la période de refroidissement, entraînées à une vitesse de rotation relativement réduite au moyen d'un dispositif d'entraînement indépendant de l'unité d'entraînement.

15. Procédé selon la revendication 13, caractérisé en ce que les parties de freinage tournantes et/ou fixes des unités de freinage découplées, sont contrôlées automatiquement pendant et/ou après la période de refroidissement, en ce qui concerne leur aptitude au fonctionnement, notamment en ce qui concerne l'absence de fissures des disques ou des tambours de freins et l'usure des garnitures de freins.
